Europäisches Patentamt

European Patent Office

Office européen des brevets

(19)

(11) Veröffentlichungsnummer: **0 134 992**
**B1**

# (12) EUROPÄISCHE PATENTSCHRIFT

(45) Veröffentlichungstag der Patentschrift :
28.09.88

(51) Int. Cl.⁴ : **C 08 G 69/18, C 08 G 69/16**

(21) Anmeldenummer : 84108064.1

(22) Anmeldetag : 10.07.84

(54) **Verfahren zur Herstellung von flächigen Formteilen aus faserverstärktem Polyamid.**

(30) Priorität : 15.07.83 DE 3325554

(43) Veröffentlichungstag der Anmeldung :
27.03.85 Patentblatt 85/13

(45) Bekanntmachung des Hinweises auf die Patenterteilung : 28.09.88 Patentblatt 88/39

(84) Benannte Vertragsstaaten :
BE DE FR GB IT NL SE

(56) Entgegenhaltungen :
DE-A- 1 720 352
DE-A- 2 817 778
FR-A- 2 120 161
US-A- 4 297 389
CHEMICAL ABSTRACTS, Band 87, Nr. 14, 3. Oktober 1977, Seite 58, Nr. 103470d, Columbus, Ohio, USA; & JP - A - 77 16560 (TOYO INK MFG. CO., LTD.) 07.02.1977
ELIAS - Neue Polymere Werkstoffe
Die Akte enthält technische Angaben, die nach dem Eingang der Anmeldung eingereicht wurden und die nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Horn, Peter, Dr.
Neue Stuecker 15
D-6900 Heidelberg (DE)
Erfinder : Marx, Matthias, Dr.
Seebacher Strasse 49
D-6702 Duerkheim (DE)
Erfinder : Welz, Martin
Kaiserlauterer Strasse 231
D-6702 Bad Duerkheim (DE)
Erfinder : Baumann, Edwin
Laurentiusstrasse 11
D-6707 Schifferstadt (DE)

## Beschreibung

Die Erfindung betrifft ein Verfahren zur Herstellung von flächigen Formteilen aus faserverstärkten Polyamiden durch alkalische Polymerisation eines Lactams in einer geschlossenen Form, welche Verstärkungsfasern in Form eines textilen Fasergebildes, z. B. einer Glasfasermatte, enthält.

Glasmattenverstärkte Thermoplaste können bekanntlich hergestellt werden, indem man Glasfasermatten kontinuierlich mit einer Thermoplastschmelze imprägniert und verpreßt. Bei Polyamiden ist dieses Verfahren infolge ihrer hohen Viskosität sehr schwierig durchzuführen, außerdem ist es wegen der hohen Schmelztemperaturen der Polyamide auch sehr energieintensiv.

Man hat deshalb auch schon versucht (DE-A 22 49 189), Glasmatten kontinuierlich mit Lactam zu imprägnieren und dieses alkalisch zu polymerisieren. Da dieses Verfahren auf einer Doppelbandpresse unter Inertgasatmosphäre durchgeführt wird, ist es apparativ sehr aufwendig ; außerdem können dabei nur ebene Platten hergestellt werden.

Bei der bekannten, diskontinuierlich durchgeführten alkalischen Lactam-Polymerisation wird das Monomere in eine offene Form gegossen und darin auspolymerisiert. In verschiedenen Druckschriften (z. B. DE-A 1 570 876 und DE-A 1 520 392) wird erwähnt, daß die Polymerisation auch in Gegenwart von Zusatzstoffen, wie z. B. Glasgeweben, durchgeführt werden kann, die teilweise auch schon vor der Polymerisation in die Gießform eingebracht wurden. Um eine vollständige, blasenfreie Durchtränkung der Glasmatten mit dem flüssigen Monomeren zu erhalten, werden dabei aber verhältnismäßig lange Zykluszeiten angewandt, die ein in technischem Maßstab durchgeführtes Verfahren unwirtschaftlich erscheinen lassen.

In der DE-A 28 17 778 wird angedeutet, daß das Lactam auch in eine Glasfasern enthaltende Form eingespritzt werden kann. Bei dem dort beschriebenen Verfahren wird aber das Lactam in eine auf nur 100 °C vorgeheizte Form eingebracht und erst in der Form auf 175 bis 220 °C erwärmt und polymerisiert. Auch hier ergeben sich lange Taktzeiten, da die Form nach jeder Füllung mit Lactam auf 175 bis 220 °C erwärmt und dann wieder auf 100 °C abgekühlt werden muß. Darüberhinaus hat es sich gezeigt, daß bei Polymerisationstemperaturen oberhalb von 170 °C, insbesondere oberhalb von 180 °C Polyamide mit niedrigem Molekulargewicht und verhältnismäßig hohem Restmonomerengehalt entstehen, was sich negativ auf die mechanischen Eigenschaften auswirkt. Auch besteht bei derart hohen Polymerisationstemperaturen die Gefahr, daß sich die üblichen Aktivatoren zersetzen, was zur Bildung von Blasen an der Formteiloberfläche führt.

In der Publikation "Neue polymere Werkstoffe für die industrielle Anwendung" von H.G. Elias und F. Vohwinkel (Carl Hanser Verlag, München, Wien 1983, Seiten 235-238) werden Polyamid-RIM-Systeme beschrieben, die aus Nylon-Block-Copolymeren "NBC-RIM" bestehen und neben Caprolactam als Blockcopolymere Poly(ethylenglykol), Poly(propylenglykol) oder Hydroxylgruppen haltige Polybutadiene enthalten. NBC-RIM, bei dem die Polyamid- und Polyolblöcke unverträglich und für die mechanischen Eigenschaften verantwortlich sind, können mit Glasfasern verstärkt werden. Hinsichtlich der Art der verwendeten Glasfasern und deren Einbringung in das Formteil werden jedoch keine Angaben gemacht.

Der Erfindung lag somit die Aufgabe zugrunde, das bekannte Verfahren zur Herstellung von flächigen Formteilen aus mit textilen Fasergebilden verstärktem Polyamid durch alkalische Lactampolymerisation in einer Form so zu verbessern, daß in kurzen Taktzeiten Formteile mit guten mechanischen Eingenschaften und einwandfreier Oberfläche erhalten werden.

Erfindungsgemäß wurde gefunden, daß diese Aufgabe gelöst wird, wenn man die Lactamschmelze innerhalb eines Zeitraum von 2 bis 50 sec in eine auf eine Temperatur zwischen 120 und 180 °C erwärmte, geschlossene Form einpreßt und innerhalb eines Zeitraums von weniger als 3 min bei einer Temperatur zwischen 120 und 180 °C zu einem Polyamid mit einem K-Wert von mehr als 100 polymerisiert.

Es war überraschend, daß beim Einpressen von flüssigen Lactam unter Druck in eine Form das darin enthaltene textile Flächengebilde überhaupt einwandfrei getränkt wird. Aufgrund von Erfahrungen bei der Polyurethan-Technologie hätte man erwarten müssen, daß das textile Flächengebilde durch die mit großer Geschwindigkeit eingepreßte Lactam-Schmelze weggeschwemmt wird, was eine ungleichmäßige Tränkung mit vielen Lufteinschlüssen zur Folge hätte.

Die Herstellung von Polyamid-Formkörpern durch aktivierende alkalische Lactampolymerisation ist bekannt. Sie ist beispielsweise im Kunststoff-Handbuch, Band VI, Polyamide, Carl-Hanser-Verlag 1966, Seiten 46 bis 49 ausführlich beschrieben. Dabei geht man von zwei Komponenten A und B aus, wobei die Komponente A eine Katalysator enthaltende Lactam-Schmelze und die Komponente B eine Aktivator enthaltende Lactam-Schmelze ist. Die beiden Komponenten werden gemischt, in eine Form transportiert und dort polymerisiert.

Bevorzugtes Lactam ist ε-Caprolactam, darüber hinaus können auch Pyrrolidon, Capryllactam, Laurinlactam, Önanthlactam sowie die entsprechenden C-substituierten Lactame eingesetzt werden. Die Lactame können auch modifiziert sein, beispielsweise mit Polyetherolen, Präpolymeren, Isocyanaten oder mit Bisacyl-Lactamen nach der DE-A 24 12 106.

Die Polymerisation des Lactams erfolgt in Gegenwart von 10 bis 75, vorzugsweise von 10 bis 60 Gew.-% (bezogen auf das fertige Formteil) eines textilen Fasergebildes, welches von der Polymerisation in die Form eingebracht worden war. Das Fasergebilde kann als Matte, Vlies, Gewebe oder Filz vorliegen ; die Fasern können aus Glas, Kohlenstoff, aromatischem Polyamid oder auch aus natürlichen Materialien wie Baumwolle bestehen.

Bevorzugt sind Glasmatten mit einem Flächengewicht von 150 bis 1200 $g.m^{-2}$. Die Matten können auf übliche Weise mechanisch durch Nadeln verfestigt sein oder durch übliche Bindemittel, wie z. B. Polyurethane gebunden sein. Der Durchmesser der Fasern beträgt vorzugsweise 7 bis 20 μm, die Glasfasern sind zweckmäßigerweise mit üblichen, die Polymerisation nicht störenden Schlichten versehen, wie sie beispielsweise in der US-A 4 358 502 beschrieben sind.

Geeignete Katalysatoren sind z. B. Alkali- und Erdalkaliverbindungen von Lactamen, wie Natrium-ε-caprolactamat, oder von kurzkettigen aliphatischen Carbonsäuren, wie Natrium- oder Kaliumformiat, oder von Alkoholen mit 1 bis 6 Kohlenstoffatomen, wie Natriummethylat oder Kalium-tert.-butylat. Außerdem können auch Alkalioder Erdalkalihydride, -hydroxyde oder -carbonate verwendet werden, sowie Grignard-Verbindungen. Die Katalysatoren werden üblicherweise in Mengen von 0,1 bis 10 Mol.%, bezogen auf Gesamt-Lactam, eingesetzt.

Als Aktivatoren kommen in Frage : N-Acyllactame, wie N-Acetylcaprolactam, Bisacyllactame, substituierte Triazine, Carbodiimide, Ketene, Cyanamide, Mono- und Polyisocyanate, sowie maskierte Isocyanatverbindungen. Sie werden bevorzugt in Mengen von 0,1 bis 10 Mol.% eingesetzt.

Die Schlagzähigkeit der Formmassen kann durch ülbiche Zusätze, wie Polyalkylenglykole mit Molekulargewichten von 2000 bis 100.000 erhöht werden, ferner durch Zusatz von reaktiven oder nicht reaktiven Kautschuken, wie z. B. Pfropfpolymerisaten.

Die Polymerisation des Lactams kann in Gegenwart ülbicher Stabilisatoren durchgeführt werden. Besonders vorteilhaft ist eine Kombination von CuI und KI im Molverhältnis 1 :3, die in Mengen von 50 bis 100 ppm Kupfer, bezogen auf Gesamtlactam, der aktivatorhältigen Komponente B zugesetzt wird. Weitere geeignete Stabilisatoren sind Kryptophenole und Amine.

Weitere Zusatzstoffe sind anorganische Füllstoffe in Mengen von 10 bis 60 Gew.% (bezogen auf das Formteil), welche die Polymerisation nicht stören, z. B. Metallpulver, Quarzmehl, Metalloxide, Graphit, Ruß, Silicagel, Pigmente, Wollastonit und Kreide. Ferner können Lichtstabilisatoren, optisch aufhellend wirkende Substanzen, Flammschutzmittel, Kristallisationsbeschleuniger, wie z. B. Talkum oder Polyamid-2,2, Schmiermittel wie Molybdänsulfid, sowie schrumpfmindernde Substanzen zugesetzt werden.

Besonders günstig erweist sich der Zusatz von Entschäumern in Mengen von 0,05 bis 5, vorzugsweise von 0,1 bis 1 Gew.%, welche den Einschluß von Luftblasen im Formteil verhindern. Bevorzugte Entschäumer sind 5 bis 20 gew.%ige Lösungen von Dienpolymeren, insbesondere Polybutadien, in organischen insbesondere aromatischen Lösungsmitteln. Derartige Entschäumer werden von der Fa. Mallinckrodt unter der Bezeichnung ®BYK A 500 und A 501 angeboten.

Zweckmäßig ist ferner der Zusatz von inneren Trennmitteln in Mengen von 0,05 bis 2 Gew.%, beispielsweise von Stearaten des Calciums, Natriums oder Kaliums, von Stearylstearat oder Octadecylalkohol.

Die bei dem erfindungsgemäßen Verfahren angewandte Arbeitsweise entspricht einer modifizierten Reaktionsspritzgußtechnik (RIM), die für Polyurethane, z. B. von Piechota und Röhr in "Integralschaumstoffe", Carl-Hanser-Verlag 1975, Seiten 34 bis 37, beschrieben ist.

Die beiden Komponenten A und B werden in Vorlagekesseln getrennt auf eine Temperatur oberhalb des Schmelzpunktes des Lactams, vorzugsweise auf 80 bis 140 °C, temperiert. Mit hydraulisch angetriebenen, beheizten Tauchkolbenpumpen werden die Komponenten durch beheizte Rohre zu einem ebenfalls beheizten Mischkopf gefördert. Beim Einpressen in die Form wird der Räumkolben des Mischkopfes zurückgezogen und die beiden genau dosierten Komponenten treten in die geöffnete Mischkammer ein, werden dort innig vermischt und in die angeflanschte Form eingepreßt. Dies geschieht unter einem Druck von 2 bis 300 bar und insbesondere bei 2 bis 30 bar. Innerhalb von 2 bis 50 sec, vorzugsweise von 3 bis 20 sec, ist die Lactam-Schmelze vollständig von dem Mischkopf in die Form überführt. Eine Stickstoffspülung der Form ist nicht erforderlich.

Die Form ist erfindungsgemäß auf eine Temperatur von 120 bis 180 °C, vorzugsweise auf 125 bis 160 °C und insbesondere auf 130 bis 150 °C vorgeheizt. Da das textile Fasergebilde bereits vorher in die Form eingelegt worden war, hat auch dieses die Formtemperatur angenommen. Die Lactam-Schmelze erwärmt sich in der Form rasch auf deren Temperatur und polymerisiert dabei innerhalb eines Zeitraumes von weniger als 3 min. Im allgemeinen kann das fertige Formteil bereits nach 1 bis 2 min aus der Form entnommen werden. Bei einer Polymerisationstemperatur zwischen 120 und 180 °C entsteht ein hochmolekulares Polyamid mit einem K-Wert (nach Fikentscher, Cellulosechemie 13, S. 58) von mehr als 100, vorzugsweise von 110 bis 160, dessen Gehalt an Monomeren und Oligomeren unter 3 %, vorzugsweise unter 2 % liegt. Der K-Wert kann durch Zusatz bekannter Regler, z. B. langkettiger aliphatischer Monoamine, wie Stearylamin, oder Vernetzer, wie z. B. Methylenbiscaprolactam, gesteuert werden.

Nach dem erfindungsgemäßen Verfahren kann man großflächige Formteile, beispielsweise Platten einer Dicke zwischen 0,5 und 20 mm herstellen. Diese können als Halbzeug durch Pressen bei Temperaturen oberhalb des Schmelzpunktes des Polyamids zu Fertigteilen weiterverarbeitet werden. Wenn man entsprechend ausgestaltete Formen und konturierte Matten verwendet, kann man aber auch direkt Fertigteile herstellen.

Die nach dem erfindungsgemäßen Verfahren hergestellten Formteile zeichnen sich durch gute mechanische Eigenschaften und eine einwandfreie Oberfläche aus. Sie eignen sich insbesondere als Formteile für die Automobil- und Flugzeugindustrie, beispielsweise für Karosserieteile, wie Kotflügel und Türen, sowie für technische Gehäuse und zur Herstellung von Sandwichteilen.

Die im Beispiel genannten Prozente beziehen sich auf das Gewicht.

Beispiel

Rezeptur der Komponente A :

43,75 g Caprolactam

6,0 g einer 17,5 %igen Lösung von Natriumlactamat in Caprolactam

0,25 g einer 14 %igen Lösung eines modifizierten Polybutadiens in einem Gemisch aromatischer Kohlenwasserstoffe (RBYK A 500 der Fa. Mallinckrodt)

Rezeptur der Komponente B :

41,25 g Caprolactam

8,5 g einer Lösung aus 83,5 % Caprolactam und 16,5 % Hexamethylendiisocyanat

0,25 g BYK A 500

Die Komponente A wurde auf 100 °C, die Komponente B auf 128 °C vorgeheizt. Die Komponenten wurden in einem selbstreinigenden Mischkopf mit Räumkolben, hergestellt von der Fa. Elastogran Maschinenbau, Straßlach, im Verhältnis 1 :1 gemischt.

Das Formnest ist eine Stahlform mit den Innenmaßen 640 × 240 × 4 mm, in welche drei Glasmatten mit einem Flächengewicht von 600 g.m$^{-2}$ ohne Fixierung übereinander eingelegt sind. Die Form samt Glasmatten wurde auf eine Temperatur von 150 °C vorgeheizt. Innerhalb von 7 sec wurde die Mischung aus dem Mischkopf drucklos in die Form überführt. Sie erwärmt sich rasch auf 150 °C und polymerisiert zu einem Polyamid mit einem K-Wert von 130. Nach 1,5 min wurde die Form geöffnet und das fertige Formteil entnommen. Es hatte einen Glasfasergehalt von 35 % und wies eine glatte, blasenfreie Oberfläche auf.

Zum Vergleich wurde mit der gleichen Apparatur in Anlehnung an das Verfahren nach der DE-A 28 17 778 ein Formteil hergestellt, wobei die Form nur auf 100 °C vorgeheizt wurde und die Form innerhalb von 15 min auf 177 °C erwärmt wurde. Nach 2 Stunden wurde das Formteil entnommen. Das Polyamid hat einen K-Wert von 94 und einen Monomerengehalt von 4 %, was eine Verschlechterung der mechanischen Eigenschaften, insbesondere der Zugfestigkeit, zur Folge hat. Das Formteil wies eine sehr schlechte Oberfläche auf.

**Patentansprüche**

1. Verfahren zur Herstellung von flächigen Formteilen aus Polyamid und 10 bis 75 Gew.-% Verstärkungsfasern in Form eines textilen Fasergebildes, wobei man eine Katalysator und Aktivator enthaltende Lactamschmelze in eine Form einbringt und in der Form polymerisiert, dadurch gekennzeichnet, daß die Lactamschmelze mittels der Reaktionspritzgußtechnik innerhalb eines Zeitraums von 2 bis 50 sec in die auf eine Temperatur zwischen 120 und 180 °C erwärmte geschlossene Form, welche das Fasergebilde enthält, mit einem Druck von mindestens 2 bis 300 bar eingepreßt wird und innerhalb eines Zeitraums von weniger als 3 min bei einer Temperatur zwischen 120 und 180 °C zu einem Polyamid mit einem K-Wert von mehr als 100 polymerisiert wird.

2. Verfahren zur Herstellung von flächigen Formteilen aus faserverstärktem Polyamid nach Anspruch 1, dadurch gekennzeichnet, daß man bei der Lactampolymerisation als Entschäumer 0,05 bis 5 Gew.-% einer Lösung eines Dienpolymerisats in einem organischen Lösungsmittel zusetzt.

3. Verwendung der Formteile nach Anspruch 1 zur Herstellung von Fertigteilen durch Verpressen bei einer Temperatur oberhalb des Erweichungspunktes des Polyamids.

**Claims**

1. A process for the production of a sheet-like molding from a nylon and 10-75 % by weight of reinforcing fibers in the form of a textile fiber structure, in which a lactam melt containing a catalyst and an activator is introduced into a mold and is polymerized in the mold, wherein the lactam melt is forced by means of the reactive-injection molding technique, in the course of from 2 to 50 sec, into the closed mold which contains the fiber structure and is heated at from 120 to 180 °C, under a pressure of from not less than 2 to 300 bar and is polymerized in the course of less than 3 min at from 120 to 180 °C to give a nylon having a K value greater than 100.

2. A process for the production of a sheet-like molding from a fiber-reinforced nylon as claimed in claim 1, wherein from 0.05 to 5 % by weight of a solution of a diene polymer in an organic solvent is added as an antifoam during the lactam polymerization.

3. Use of a molding as claimed in claim 1 for the production of finished components by compression at above the softening point of the nylon.

**Revendications**

1. Procédé de fabrication d'éléments moulés plats en polyamide avec 10 à 75 % en poids de fibres de renforcement, de la forme d'un produit textile fibreux, dans lequel on introduit dans un moule et polymérise dans celui-ci un mélange de lactame fondue, d'un catalyseur et d'un activateur, caractérisé en ce que le mélange lactamique fondu est injecté, selon la technique de moulage par injection avec réaction, en l'espace de 2 à 50 secondes et sous une pression d'au moins 2 bars et pouvant aller jusqu'à 300 bars, dans le moule fermé, contenant le produit fibreux et chauffé à une température comprise entre 120 et 180 °C, et est polymérisé en moins de 3 minutes, entre 120 et 180 °C, en un polyamide avec une valeur K supérieure à 100.

2. Procédé de fabrication d'éléments moulés plats en polyamide renforcé par des fibres suivant la revendication 1, caractérisé en ce que, pour la polymérisation de la lactame, on ajoute comme agent anti-mousse 0,05 à 5 % en poids d'une solution d'un polymère diénique dans un solvant organique.

3. Utilisation des éléments moulés suivant la revendication 1 pour la production de pièces moulées finies par moulage par compression à une température supérieure au point de ramollissement du polyamide.